# NEW EUROPEAN PATENT SPECIFICATION

(11) **EP 0 305 600 B2**
(45) Date of publication and mention of the opposition decision: **03.07.1996**
(45) Mention of the grant of the patent: 18.11.1993
(21) Application number: 87201664.7
(22) Date of filing: 03.09.1987
(51) Int. Cl.: A01B 33/16, A01B 49/02, A01B 29/06

(54) **A soil cultivating machine**
Gerät zur Bodenbearbeitung
Appareil préparateur de sol

(43) Date of publication of application: 08.03.1989
(73) Proprietor: C. van der Lely N.V., NL-3155 PD Maasland (NL)
(72) Inventor: van der Lely, Cornelis, Zug (CH)
(74) Representative: Mulder, Herman

(56) References cited:
- DE-A- 2 101 005
- DE-A- 3 134 525
- GB-A- 2 141 611
- GB-A- 2 153 192
- GB-A- 2 153 642
- US-A- 4 088 083
- US-A- 4 200 156

## Description

The invention relates to a soil cultivating machine, comprising soil working members which are power-driven about substantially vertical axes, at least one supporting roller and a plate-shaped member arranged between the soil working members and the roller and extending over substantially the length of the roller for crumbling and distributing the earth led backwardly by the soil working members, the plate-shaped member being connected to supporting elements, between which the roller is arranged freely rotatable, and being in a fixed position during operation relative to the roller.

Such a machine is known from the DE-A-2749148. This known machine is provided with a plate-shaped member which performs a crumbling and distributing function. To the machine, a support is given by the roller. This support is not always satisfactory, particularly when the machine is combined with a seed drill or planter.

According to the invention, the plate-shaped member has such a profile that at the rear side it extends predominantly concavely, seen in the direction of operative travel, and a support member is constituted by the combination of the plate-shaped member and the roller, which is designed as a cam roller, so that by the roller and the plate-shaped member together the working depth of the soil working members can be set and the soil can be levelled, while the crumbling and distributing function of the plate shaped member will be maintained. Using this provision, the supporting surface can be enlarged significantly, whilst by means of the cam roller a driving force is obtained counteracting the greater friction produced.

For a better understanding of the invention and to show how the same may be carried into effect, reference will now be made, by way of example, to some embodiments shown in the accompanying drawings, wherein:
Figure 1 is a plan view of a soil cultivating machine comprising a construction according to the invention;
Figure 2 is a view, to an enlarged scale, taken in the direction of the arrow II in Figure 1;
Figure 3 is, to an enlarged scale, a view taken on the line III-III in Figure 1;
Figure 4 is a view in the direction of the arrow IV in Figure 3;
Figure 5 is a plan view of part of a second embodiment of a construction according to the invention;
Figure 6 is a view taken on the line VI-VI in Figure 5.

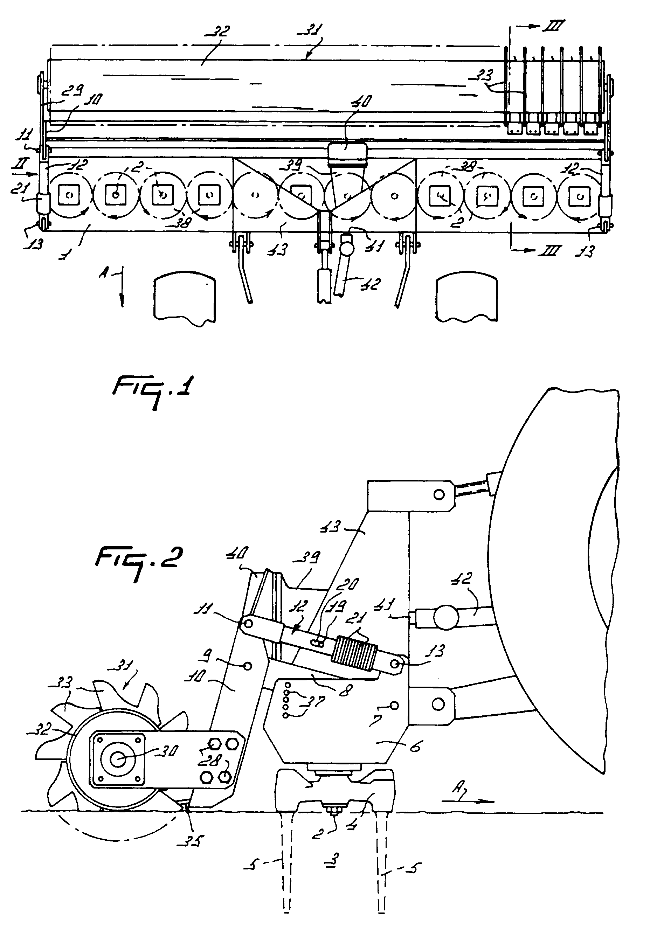

The implement shown in the drawings concerns a soil cultivating machine, in particular one for preparing a seed bed. The machine comprises a box-like frame portion 1 which extends transversely to the direction of operative travel A and in which are supported, spaced apart equidistantly by preferably 25 cms, the upwardly, preferably vertically, extending shafts 2 of soil working members 3. Each of the soil working members 3 includes a carrier 4 which extends at least substantially horizontally and is provided on the end of a shaft 2 that projects from the bottom of the frame portion 1. Near its ends, each carrier 4 is provided with soil working elements 5 which extend downwardly and, in this embodiment, are in the form of tines. The ends of the box-like frame portion 1 are closed by means of plates 6 which extend at least substantially parallel to a vertical plane in the direction of operative travel A of the machine. The plates 6 extend for more than half of their height to above the upper side of the box-like frame portion 1. Near the front side, below the mid-way point, each plate 6 is provided with a shaft 7 which extends transversely to the direction of operative travel A, the arrangement being such that the shafts 7 on the respective plates 6 are in alignment. An arm 8 is freely pivotal about each shaft 7, the arm extending rearwardly along the inner side of a plate 6. Immediately behind the box-like frame portion 1, the arm 8 is connected pivotally by means of a shaft 9 to a downwardly directed support 10 which extends obliquely downwardly and rearwardly. As is apparent from Figures 2 and 3, the support 10 reaches to above the arm 8 and near its upper side is provided with a shaft 11 which extends transversely to the direction of operative travel A and around which one end of a spring-loaded mechanism 12 is freely pivotal. The other end of the spring-loaded mechanism 12 is connected pivotally by means of a shaft 13 which also extends at least substantially transversely to the direction of operative travel A of the machine to an upwardly extending member at the front side of a plate 6. The shafts 7 to 13 constitute the pivots of a hinging quadrangle 14 which is in the form of a parallelogram and includes the spring-loaded mechanism 12. The spring-loaded mechanism 12 is fitted by means of bifurcate members 15 and 16, whose legs are pivotal around the respective shafts 11 and 13. The spring-loaded mechanism 12 includes, provided between the bifurcate members 15 and 16, telescopic tubular portions 17 and 18 whose relative movement is limited. In this situation, the front portion 18 slides in the rear portion 17. The front portion 18 includes a pin 19 which is capable of movement in a slot 20 provided in the rear portion 17. Around the tubular portion 18 there are provided between the front end of the rear tubular portion 17 and the bifurcate member 16 a plurality of cup springs 21 which bear against each other, the arrangement being such that the two tubular portions can slide with respect to each other against the action of a spring through a distance determined by the length of the slot 20. A member 22 made of plate material is applied between the supports 10, with the aid of which, during operation, the earth moved rearwardly by the soil working members 3 can be caught for additional crumbling and to be uniformly distributed over the entire width of the member via the bottom side, so that this plate-shaped member also acts as a soil levelling member. The plate-shaped member 22 extends from the bottom side of the supports 10 to approximately midway of each support. The plate-shaped member 22 has such a profile that at the rear side it extends predominantly concavely (Figure 3). At its bottom side, the plate-shaped member 22 includes a portion 23 which extends from the rear side in an at least substantially horizontal direction through a predetermined distance. Via a bend the portion 23 merges into a straight portion 24 which is directed obliquely upwardly and via a bend merges into a straight portion 25 which reaches approximately to the centre of the plate-shaped member 22 and extends upwardly at a steep angle. The portion 25 has a length which is substantially 1.5 times the length of the portion 24 and via a bend merges into a portion 26 which is at least substantially straight and extends at least substantially into the vertical direction. The length of the portion 26 amounts to approximately twice the length of the portion 25. The first-mentioned portion merges via a bend into a portion 27 which extends obliquely upwardly and rearwardly. The portions 23, 24 and 25 are located at the level of, respectively, the bottom side and the front side of a support 10 (Figure 3). Within the portion of the supports 10 that is enclosed by a plate-shaped member 22 at least substantially rectangular plates 29 are provided by means of bolts 28, which plates extend at least substantially parallel to a vertical plane in the direction of operative travel A. Between the rear ends of the plates 29 there is arranged freely rotatably by means of bearings and shafts 30 a roller 31, which roller, in this embodiment, is designed as a packer roller. The roller 31 includes a tubular portion 32 which is provided with equidistant crowns of plate-shaped cams 33, which are of a construction as shown in a side view in Figures 2 and 3. The scrapers 34 and 34A which are constituted by the legs of brackets 35, which are produced from a single piece of material, are disposed between the respective crowns of cams 33. The brackets 35 are applied by means of the portions located between the legs, on the lower portion 23 at the rear side of the plate-shaped member 22, by means of bolts 36A and clamping members 37A. The brackets 35 are preferably made of spring steel having a rectangular, preferably square, cross-section. The legs 34 and 34A of the respective brackets 35 extend through a straight portion slightly obliquely downwardly from the rear side of the plate-shaped member, the legs being located closely along the crowns of cams 33 (Figure 4). The straight portion of the legs 34 and 34A merges at least substantially perpendicularly below the axis of rotation of the roller 31 into a portion which is located substantially against the tubular portion 32. As is apparent from Figure 4, the leg 34A is of a shorter length than the leg 34. Each one of the legs 34 and 34A is bent inwardly at its free end through a portion reaching to midway between two crowns of cams 33. The bent portion of the shorter leg 34A extends at least substantially concentrically with respect to the tubular portion 32, whilst the bent portion of the longer leg extends at least substantially tangentially and reaches to a point where a radian through this point encloses an angle of approximately 30° with a horizontal plane through the axis of rotatation of the roller (Figure 3). The end of the bent portion of the shorter leg 34A reaches to a point where a radian through this point encloses an angle of approximately 45° with a horizontal plane through the axis of rotation of the roller (Figure 3). As is apparent from Figure 3, the bottom side of the plate-shaped member 22 is substantially at the level of the bottom side of the tubular portion 32 of the roller 31 and this member is located immediately in front of the roller. Each arm 8 of the hinging quadrangle 14 is provided with a hole through which a pin 36 can be inserted, which pin can also be inserted in one of a plurality of holes 37 which are provided near the rear side of a plate 6 and are located on an arc of a circle which forms part of a circle having its centre on the longitudinal centre line of the shaft 7. Inside the box-like frame portion 1, each of the shafts 2 of a soil working member 3 is provided with a spur gear wheel 38, the arrangement being such that in operation the gear wheels on the shafts of adjacent soil working members are in driving connection with each other. Near the centre, the shaft of a soil working member is extended upwardly and by means of this extension reaches into a gear box 39. Inside the gear box 39, the extension is in driving connection via a bevel gear wheel transmission and a speed variator 40 located at the rear side of the gear box with a shaft 41 which extends in the direction of operative travel A and projects beyond the gear box 39 at the front side. The projecting end of the shaft 41 can be coupled to the power take-off shaft of a tractor via an intermediate shaft 42. Near its centre, the upper side of the box-like frame portion 1 is provided with a triangular trestle 43 which at the front side has a three-point connection for coupling the machine to the three-point lifting hitch of a tractor.

The machine described in the foregoing operates as follows.

During operation, the implement is coupled to the three-point lifting hitch of a tractor by means of the three-point connection of the trestle 43 and the implement is moved in the direction indicated by the arrow A. Hereby, the respective soil working members 3 can be driven from the power take-off shaft of the tractor via the intermediate shaft 42 and the above-described transmission, whereby adjacent soil working members 3 rotate in opposite directions (Figure 1) and cultivate by means of their soil working elements 5 at least adjoining strips of soil. During operation, crumbled earth is moved rearwardly by the respective soil working members 3 in a fan-like manner, whereby the space between the soil working members 3 and the front side of the plate-shaped member 22 is continuously filled with pre-crumbled earth and any insufficiently crumbled earth is moved again within the reach of the soil working members. The plate-shaped member 22, which side facing the roller is concave, is nearer to the periphery of the roller 31 than to the paths described by the soil working elements 5 of the soil working members 3, which under certain circumstances, when e.g. heavy soils are cultivated to a greater depth, is advantageous. The crumbled earth present in the space between the soil working members 3 and the plate-shaped member 22 is discharged rearwardly in a layer in which this earth is uniformly distributed via the obliquely downwardly and rearwardly extending portions 25 and 24 of the plate-shaped member and is thereafter moved rearwards along the bottom side formed by the portion 23. Hereby, this layer of earth comes within the reach of the longitudinal portions which are formed by the legs 34 and 34A of the brackets 35, which bear on the soil by means of their non-active ends, whereafter the earth is compacted with the aid of the tubular portion 32 of the roller 31 which is induced to continuous rotation by the cams 33. With the aid of the longitudinal portions constituted by the legs 34 and 34A of the brackets 35 a further crumbling can optionally be effected. Hereby, the cams 33 rotate through slots present between the legs 34 and 34A of adjacent brackets 35. By means of their bent ends, the longitudinal portions also scrape off earth adhering to the cams 33 and the tubular portion 32. Hereby, adhering earth is scraped off so closely above the bottom side of the tubular portion 32 that no unwanted clods are left on the prepared seed bed.

As is apparent from Figure 3, the plate-shaped member 22 extends through a height which corresponds at least substantially to the diameter of the tubular portion 32 of the roller 31. The distance between the front side of the plate-shaped member 22 and the front side of the periphery of the roller 31 is approximately equal to one quarter of the diameter of the roller.

If during operation hard objects, e.g. stones, are caught between the soil working members 3 and the plate-shaped member 22 or if the cams 33 of the roller 31 hit a hard object in the soil, the whole of the plate-shaped member 22 and the roller 31 construction can deflect upwardly and rearwardly against the action of the spring-loaded mechanism 12 by pivoting of the supports 10 around the shafts 9, in order to prevent the construction from being damaged. During this pivotal action, the tubular portions 17 and 18 slide relative to each other wherafter, if the hard object has been discharged, the action of the cup springs 21 returns the whole assembly to its initial position. With the aid of the support constituted by the combination of the plate-shaped member 22 and the roller 31 it is possible to set the working depth of the soil working members 3. A change of the working depth can be accomplished by inserting the pin 36 in an other aperture 37 at the rear side of the plates 6. During this change of the working depth, the spring tension of the cup springs 21 remains the same, as the pivotal points for the spring-loaded mechanism 12 and the pivotal points between the arm 8 and a plate 6 or between the arm 8 and the support 10, respectively, constitute the vertices of a hinging parallelogram.

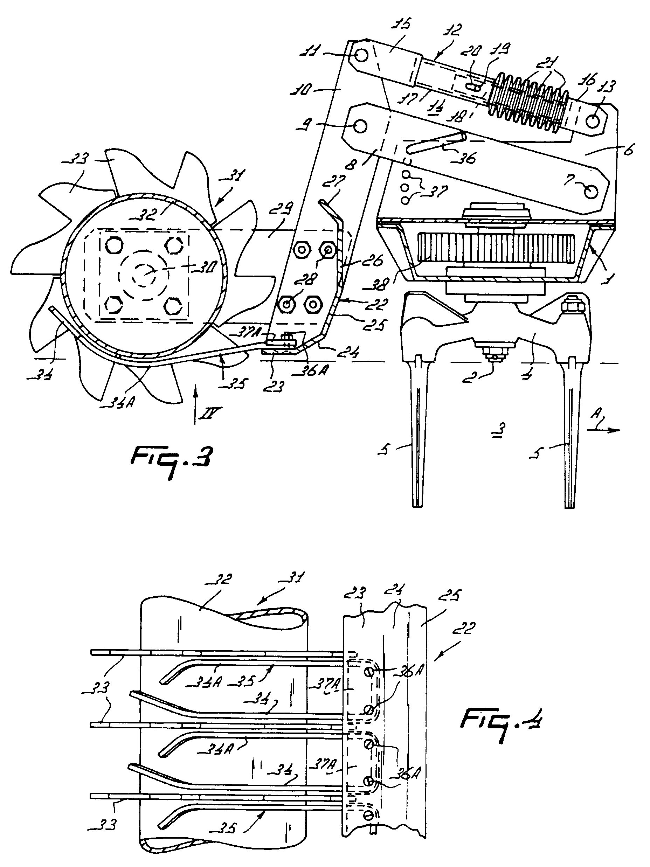

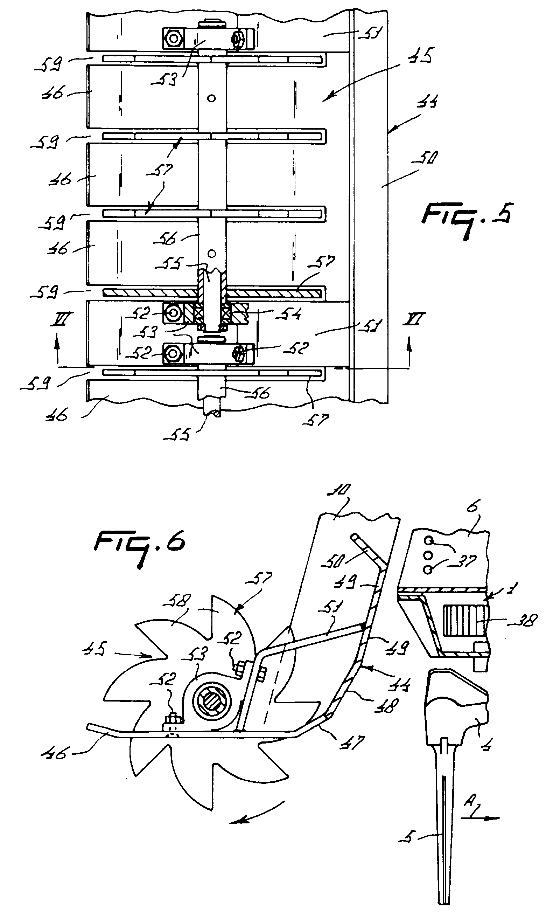

Figures 5 and 6 illustrate a second embodiment of a support formed by a combination of a plate-shaped element 44 and a roller 45, by means of which the working depth of the soil working members 3 can be set during operation. Also in this embodiment, the plate-shaped member 44 is arranged between the supports 10. The plate-shaped member 44 includes a portion 46 which extends at least substantially horizontally and at the rear side extends obliquely upwardly over a short distance (Figure 6). At its front side, the portion 46 merges into an obliquely upwardly and forwardly directed straight portion 47 which extends along a correspondingly shaped leading side of a support 10. The portion 46 merges via a bend into a straight portion 48 which has a length of 1.5 times the length of the portion 46 and is also located in the region of the leading side of a support 10. The portion 48 merges via a bend into a straight portion 49 which is of a length equal to at least twice the length of the preceding portion and also extends along the leading side of a support 10. Said last portion merges via a bend into an obliquely upwardly and rearwardly extending portion 50 which reaches to near midway a support 10. At its rear side, the plate-shaped member 44 is provided with supports 51 located near the ends and equidistantly therebetween. The supports 51 are disposed before the midway point of the portion 46 which forms the bottom side of the plate-shaped member 44 and near the midway point of the upwardly extending portion 49 of the plate-shaped member (Figure 6). Disposed at the rear side of an upwardly directed portion of the supports 51 and at the upper side of the portion 46 of the plate-shaped member 44 by means of bolts 52 there are housings 53, in which bearings 54 are provided for shafts 55 which extend at least substantially transversely to the direction of operative travel A and are in alignment. Plate sections 57, which extend at least substantially perpendicularly to the longitudinal centre lines of the shaft sections and at their periphery are provided with eight cams 58 of a construction as shown in greater detail in Figure 6, are provided equidistantly by means of a tubular portion 56 between the supports 51 on the respective shafts 55. Each of these shafts 55 constitutes a support for a group of five crowns of cams 58 having a width of approximately 40 cms. The groups of crowns of cams 58 form together with the shafts 55 the roller 45 which extends along the entire length of the plate-shaped member 44.

As is apparent from Figure 6, the plate-shaped member 44 is located immediately in front of the roller and extends to above the roller 45, whereas the portion 46 reaches to behind the roller. The action of the plate-shaped member 44 corresponds to that of the plate-shaped member 22. In this embodiment, the earth is passed along under the portion 46, which portion accomplishes a compacting of the layer of earth. In this situation, the crowns of cams 58 move through the slots 60 in the portions 46. During operation, in this embodiment, the machine bears predominantly on the lower side 46 of the plate-shaped member 44, in which by means of the slots 60 the plate sections 57 having the cams can move. During travel of the machine, the plate sections 57 are induced to rotate (arrow in Figure 6), the at least substantially horizontal longitudinal portions of the portion 46 producing a scraping action. The earth which is caught by the leading side of the plate-shaped member 49 and is uniformly distributed and crumbled to a further degree is conveyed rearwardly along the bottom side of the portion 46, whilst by means of the portion 46 constituting the bottom side of the plate-shaped member 44 a compacting of the cultivated soil is additionally accomplished. A setting of the working depth of the soil working members can be effected in a similar manner as in the preceding embodiment, whilst in operation a spring-induced deflection of the whole construction formed by the plate-shaped member 44 and the roller 59 provided with the cams 58 can be effected similarly.

In this embodiment, the plate-shaped member constituting a soil levelling member also constitutes a support for the machine, while the travel of the machine is facilitated by the roller 59.

The embodiment illustrated in Figures 5 and 6 can advantageously be used on heavy, wet soils. The combination of the plate-shaped member 44 and roller 59, in this embodiment, can also be used successfully for turning under of crop residues, e.g. straw, on stubble fields. Using the aforedescribed constructions, it is possible to obtain a very compact construction of the machine, while a plate-shaped member is used which in co-operation with the soil working members accomplishes a further crumbling and a uniform distribution of the crumbled earth and which can also serve as a scraper for the roller located therebehind and, moreover, can form part of the support of the machine.

## Claims

1. A soil cultivating machine, comprising soil working members (3) which are power-driven about substantially vertical axes, at least one supporting roller (31, 59) and a plate-shaped member (22, 24) arranged between the soil working members (3) and the roller (31, 59) and extending over substantially the length of the roller (31, 59) for crumbling and distributing the earth led backwardly by the soil working members, the plate-shaped member being connected to supporting elements, between which the roller is arranged freely rotatable, and being in a fixed position during operation relative to the roller, characterized in that the plate-shaped member has such a profile that at the rear side it extends predominantly concavely, seen in the direction of operative travel, and a support member is constituted by the combination of the plate-shaped member and the roller, which is designed as a cam roller, so that by the roller and the plate-shaped member together the working depth of the soil working members can be set and the soil can be levelled, while the crumbling and distributing function of the plate-shaped member will be maintained.

2. A soil cultivating machine as claimed in claim 1, characterized in that the plate-shaped member (22, 44) constitutes a leveling member disposed in front of the roller, whereby the said member is located closer to the roller (31, 59) than to the soil working members (3).

3. A soil cultivating machine as claimed in claim 1 or 2, characterized in that the plate-shaped member (44) is provided with slots (60) through which the cams (58) of the roller can move.

4. A soil cultivating machine as claimed in claim 3, characterized in that the slots (60) are provided in an at least substantially horizontal portion (46) of the plate-shaped member (44), the said portion (46) bearing on the ground during operation.

5. A soil cultivating machine as claimed in any one of the preceding claims, characterized in that the cams (33, 58) form part of a roller (31, 59) which is supported by the plate-shaped member (22, 44).

6. A soil cultivating machine as claimed in any one of claims 3 to 5, characterized in that the said roller (59) comprises a plurality of adjacent groups of cams (58) which are each rotatable around a shaft (55), whereby the shafts (55) for the groups of cams (58) are in alignment.

7. A soil cultivating machine as claimed in claim 6, characterized in that each of the shafts (55) for a group of cams (58) is supported near the ends by bearings (54) disposed at the rear side of the plate-shaped member (44).

8. A soil cultivating machine as claimed in claim 4 and 7, characterized in that the bearings (54) are supported on the portion (46) of the plate-shaped member (44) that bears on the ground, which portion (46) merges via a curved portion (47, 48) into an upwardly directed portion (49) of the plate-shaped member (44).

9. A soil cultivating machine as claimed in any one of the preceding claims, characterized in that the roller (31, 59) and the plate-shaped member (22, 44, 65) are spring-supported.

10. A soil cultivating machine as claimed in claim 9, characterized in that the roller (31, 59) is mounted by means of a hinging quadrangle (14) and the roller (31, 59) together with a plate-shaped member (22, 44) is movable in height against the action of a spring-loaded mechanism (12).

11. A soil cultivating machine as claimed in claim 10 characterized in that the hinging quadrangle (14) include the said spring-loaded mechanism (12), whereby the roller (31, 59) and the plate-shaped member (22, 44) together are pivotal about a lower shaft (11) of the hinging quadrangle (14) against the action of the said spring-loaded mechanism (12).

## Patentansprüche

1. Bodenbearbeitungsmaschine mit zwangläufig um im wesentlichen vertikale Achsen angetriebenen Bodenbearbeitungsgliedern (3), mindestens einer Stützwalze (31, 59) und einer Platte (22, 44), die zwischen den Bodenbearbeitungsgliedern (3) und der Walze (31, 59) angeordnet ist, sich über mindestens annähernd die Länge der Walze (31, 59) erstreckt und dazu dient, die von den Bodenbearbeitungsgliedern nach hinten verlagerte Erde zu krümeln und zu verteilen, wobei die Platte mit Stützelementen verbunden ist, zwischen denen die Walze frei drehbar angeordnet ist, und im Betrieb lagefest zu der Walze angeordnet ist, dadurch gekennzeichnet, daß die Platte ein solches Profil hat, daß sie sich an der Rückseite überwiegend konkav erstreckt, in Arbeitsrichtung gesehen, und daß die Platte zusammen mit der als Zahnpackerwalze ausgeführten Walze ein Stützglied bildet, so daß mittels der Walze und der Platte gemeinsam die Arbeitstiefe der Bodenbearbeitungsglieder einzustellen und der Boden zu nivellieren ist, während die krümelnde und verteilende Wirkung der Platte aufrechterhalten bleibt.

2. Bodenbearbeitungsmaschine nach Anspruch 1,
dadurch gekennzeichnet, daß die Platte (22, 44) eine Nivellierungsvorrichtung bildet, die sich vor der Walze befindet, wobei sie näher an der Walze (31, 59) als an den Bodenbearbeitungsgliedern (3) angeordnet ist.

3. Bodenbearbeitungsmaschine nach Anspruch 1 oder 2,
dadurch gekennzeichnet, daß die Platte (44) Schlitze (60) aufweist, durch die sich die Zähne (58) der Walze hindurchbewegen können.

4. Bodenbearbeitungsmaschine nach Anspruch 3,
dadurch gekennzeichnet, daß die Schlitze (60) in einem mindestens annähernd horizontalen Abschnitt (46) der Platte (44) vorgesehen sind, und daß dieser Abschnitt (46) im Betrieb Bodenberührung hat.

5. Bodenbearbeitungsmaschine nach einem der vorhergehenden Ansprüche,
dadurch gekennzeichnet, daß die Zähne (33, 58) Bestandteile einer Walze (31, 59) sind, die von der Platte (22, 44) abgestützt ist.

6. Bodenbearbeitungsmaschine nach einem der Ansprüche 3 bis 5,
dadurch gekennzeichnet, daß die Walze (59) mehrere benachbarte Zahnkränze (58) aufweist, die um eine Achse (55) drehbar sind, und daß die Achsen (55) der Zahnkränze (58) fluchten.

7. Bodenbearbeitungsmaschine nach Anspruch 6,
dadurch gekennzeichnet, daß die Achsen (55) der Zahnkränze (58) jeweils nahe ihren Enden mittels Lagern (54) abgestützt sind, die an der Rückseite der Platte (44) vorgesehen sind.

8. Bodenbearbeitungsmaschine nach den Ansprüchen 4 und 7,
dadurch gekennzeichnet, daß die Lager (54) auf dem den Boden berührenden Abschnitt (46) der Platte (44) abgestützt sind, und daß dieser Abschnitt (46) über einen gekrümmten Abschnitt (47, 48) in einen aufwärts gerichteten Abschnitt (49) der Platte (44) übergeht.

9. Bodenbearbeitungsmaschine nach einem der vorhergehenden Ansprüche,
dadurch gekennzeichnet, daß die Walze (31, 59) und die Platte (22, 44, 65) federnd abgestützt sind.

10. Bodenbearbeitungsmaschine nach Anspruch 9,
dadurch gekennzeichnet, daß die Walze (31, 59) mittels eines Viergelenk-Gestänges (14) montiert und zusammen mit der Platte (22, 44) gegen die Kraft eines Federmechanismus (12) höhenbeweglich ist.

11. Bodenbearbeitungsmaschine nach Anspruch 10,
dadurch gekennzeichnet, daß der Federmechanismus (12) Bestandteil des Viergelenk-Gestänges (14) ist, und daß die Walze (31, 59) und die Platte (22, 44) gemeinsam um eine untere Achse (11) des Viergelenk-Gestänges (14) gegen die Kraft des Federmechanismus (12) schwenkbar sind.

## Revendications

1. Machine pour cultiver le sol, comprenant des organes de travail du sol (3) entraînés par un moteur autour d'axes sensiblement verticaux, au moins un rouleau de support (31, 59) et un organe en forme de plaque (22, 44) disposé entre les organes de travail du sol (3) et le rouleau (31, 59) et s'étendant sur pratiquement toute la longueur du rouleau (31, 59) pour émietter et répartir la terre rejetée vers l'arrière par les organes de travail du sol, l'organe en forme de plaque étant relié à des éléments de support entre lesquels le rouleau est disposé en pouvant tourner librement, et étant en position fixe par rapport au rouleau pendant le travail,
**caractérisée** en ce que l'organe en forme deplaque a un profil tel que dans son côté postérieur il a une forme principalement concave en étant vu dans le sens de marche du travail, et en ce qu'un organe de support est constitué par la combinaison de l'organe en forme de plaque et du rouleau, lequel est conçu sous la forme d'un rouleau à cames, de telle sorte que, par l'action conjointe du rouleau et de l'organe en forme de plaque, la profondeur de travail des organes de travail du sol puisse être réglée et le sol être nivelé, tandis que la fonction d'émiettage et de répartition par l'organe en forme de plaque est conservée.

2. Machine pour cultiver le sol selon la revendication 1, caractérisée en ce que l'organe en forme de plaque (22, 44) constitue un élément niveleur disposé en avant du rouleau, cet organe étant situé plus près du rouleau (31, 59) que des organes de travail du sol (3).

3. Machine pour cultiver le sol selon la revendication 1 ou 2, caractérisée en ce que l'organe en forme de plaque (44) est muni de fentes (60) à travers lesquelles les cames (58) du rouleau peuvent circuler.

4. Machine pour cultiver le sol selon la revendication 3, caractérisée en ce que les fentes (60) sont prévues dans une partie (46) au moins sensiblement horizontale de l'organe (44) en forme de plaque, ladite partie (46) portant sur le sol au cours du fonctionnement.

5. Machine pour cultiver le sol selon l'une quelconque des revendications précédentes, caractérisée en ce que les cames (33, 58) font partie d'un rouleau (31, 59) qui est supporté par l'organe (22, 44) en forme de plaque.

6. Machine pour cultiver le sol selon l'une quelconque des revendications 3 à 5, caractérisée en ce que ledit rouleau (59) comprend une pluralité de groupes de cames (58) adjacents qui sont chacun rotatifs autour d'un arbre (55), les arbres (55) pour les groupes de cames (58) étant en alignement.

7. Machine pour cultiver le sol selon la revendication 6, caractérisée en ce que chacun des arbres (55) pour un groupe de cames (58) est supporté près de ses extrémités par des paliers (54) disposés sur le côté postérieur de l'organe (44) en forme de plaque.

8. Machine pour cultiver le sol selon les revendications 4 et 7, caractérisée en ce que les paliers (54) sont supportés sur la partie (46) de l'organe (44) en forme de plaque qui porte sur le sol, laquelle partie (46) se raccorde par une partie courbe (47, 48) à une partie (49) de l'organe (44) en forme de plaque, cette partie (49) étant dirigée vers le haut.

9. Machine pour cultiver le sol selon l'une quelconque des revendications précédentes, caractérisée en ce que le rouleau (31, 59) et l'organe (22, 44, 65) en forme de plaque sont supportés par des ressorts.

10. Machine pour cultiver le sol selon la revendication 9, caractérisée en ce que le rouleau (31, 59) est monté au moyen d'un quadrilatère articulé (14) et le rouleau (31, 59), ensemble avec un organe (22, 44) en forme de plaque, est mobile en hauteur contre l'action d'un mécanisme (12) sollicité par un ressort.

11. Machine pour cultiver le sol selon la revendication 10, caractérisée en ce que le quadrilatère articulé (14) comprend ledit mécanisme (12) sollicité par un ressort, le rouleau (31, 59) et l'organe (22, 44) en forme de plaque étant ensemble pivotants autour d'un arbre inférieur (11) du quadrilatère articulé (14) contre l'action dudit mécanisme (12) sollicité par un ressort.
